# EUROPÄISCHE PATENTSCHRIFT

(11) **EP 2 438 361 B1**
(45) Veröffentlichungstag und Bekanntmachung des Hinweises auf die Patenterteilung: **20.11.2013**
(21) Anmeldenummer: 10708177.0
(22) Anmeldetag: 04.03.2010
(51) Int. Cl.: F24H 1/18, F24H 9/02, A47J 31/54

(54) **WARMWASSERSPEICHER MIT WARTUNGSDECKEL**
HOT WATER RESERVOIR HAVING SERVICE COVER
BALLON ACCUMULATEUR D'EAU CHAUDE AVEC COUVERCLE DE MAINTENANCE

(30) Priorität: 13.03.2009 DE 102009013097
(43) Veröffentlichungstag der Anmeldung: 11.04.2012
(73) Patentinhaber: BSH Bosch und Siemens Hausgeräte GmbH, 81739 München (DE)
(72) Erfinder: HU, Hengzhong, Jiangsu 225652 (CN); LI, Qiang, Jiangsu 210000 (CN); SCHRÖDER, Bernd, Jiangsu 210008 (CN)
(86) Internationale Anmeldenummer: PCT/EP2010/052736
(87) Internationale Veröffentlichungsnummer: WO 2010/102941

(56) Entgegenhaltungen:
- GB-A- 2 290 601
- US-A- 5 251 282
- US-A- 5 299 280
- US-A- 5 574 822

## Beschreibung

### Hintergrund der Erfindung

Die vorliegende Erfindung betrifft einen Warmwasserspeicher zur Erwärmung von Wasser mittels elektrischer Energie, der ein Gehäuse bestehend aus zumindest einem ersten und einem zweiten Gehäuseteil und eine Anschlussvorrichtung zum Anschließen von zumindest einer elektrischen Leitung aufweist, wobei die Anschlussvorrichtung im Innenraum des Warmwasserspeichers angeordnet ist, und zumindest ein Gehäuseteil eine Leitungsöffnung zur Durchführung einer elektrischen Leitung aufweist.

### Stand der Technik

Aus dem Stand der Technik ist beispielsweise DE 23 50 838 A1 bekannt, in der ein elektrisch beheizbarer Kochend- und Warmwasserbereiter mit elektrischer Zuleitung offenbart ist. Neben einem biegsamen Schlauch wird auch die elektrische Zuleitung durch einen Stutzen geführt.

Aus DE 21 48 026 A ist ein elektrisch beheizbarer Heißwasserspeicher bekannt, der über ein Anschlusskabel mit Strom versorgt wird. In den Deckel ist eine schlangenartig gewundene Ausnehmung eingeformt, die für das Anschlusskabel als Zugentlastung dient.

Weitere Warmwasserspeicher sind in der US 5 574 822 und der GB 2 290 601 A offenbart.

Das Dokument US 5 574 822 offenbart den Oberbegriff des Anspruchs 1.

Auf dem Markt erhältliche elektrisch beheizbare Warmwasserspeicher sind mit einem elektrischen Anschlusskabel versehen, das durch eine Öffnung in dem Gehäuse des Warmwasserspeichers, das aus Stahl gefertigt ist, geführt wird. Um eine wasserdichte Durchführung zu erzielen, ist das Anschlusskabel fest mit dem Stahlgehäuse verbunden. Beispielsweise ist das Anschlusskabel an dem Stahlgehäuse angespritzt. Um ein defektes Anschlusskabel auszutauschen wird die Verbindung mit dem Stahlgehäuse getrennt und das Stahlgehäuse demontiert. Das neue Kabel ist bei der Montage mit einem Spezialwerkzeug erneut mit dem Stahlgehäuse zu verbinden.

### Der Erfindung zugrundeliegende Aufgabe

Der Erfindung liegt die Aufgabe zugrunde, einen gegenüber dem Stand der Technik verbesserten Warmwasserspeicher zur Erwärmung von Wasser mittels elektrischer Energie bereitzustellen.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch einen Warmwasserspeicher mit den Merkmalen des Anspruchs 1.

Durch die Erfindung kann vorteilhafterweise ein einfacher, schneller und kostengünstiger Austausch der Leitung, beispielsweise aufgrund eines Defekts der Leitung, ermöglicht werden. Ein weiterer erreichbarer Vorteil der erfindungsgemäßen Lösung ist, dass der Anschluss der elektrischen Leitung erst nach einer Montage des Warmwasserspeichers, beispielsweise an einer Wand, erfolgen kann.

Unter einem Warmwasserspeicher zur Erwärmung von Wasser mittels elektrischer Energie sind Geräte zu verstehen, die einen Tank aufweisen, in dem Wasser erwärmt und gespeichert werden kann. Zum Aufheizen des Wassers befindet sich zumindest ein elektrisches Heizelement in dem Tank. Die Erfindung eignet sich insbesondere für die Erwärmung von Frischwasser. Es sind aber beispielsweise auch Ausführungen der Erfindung für die Verwendung mit Brauchwasser denkbar. Das erwärmte Wasser kann beispielsweise zur Körperreinigung, Geschirrreinigung oder als Trinkwasser verwendet werden. Unter dem Innenraum des Warmwasserspeichers ist der Raum zu verstehen, der von dem Gehäuse umschlossen ist. Der Innenraum kann natürlich verschiedene Räume aufweisen, wie beispielsweise einen Wassertank und einen Raum zur thermischen Isolation des Wassertanks. Unter einer Aussparung des ersten Gehäuseteils ist eine Öffnung in dem ersten Gehäuseteil oder eine Einbuchtung am Rand des ersten Gehäuseteils zu verstehen. Zur Versorgung mit elektrischer Energie kann das Warmwassergerät vorteilhafterweise über eine elektrische Leitung an ein externes Stromversorgungsnetz angeschlossen werden. Vorteilhafterweise weist die elektrische Leitung einen oder mehrere elektrische Leiter auf, die auch als Ader bezeichnet werden können. Unter einer elektrischen Leitung ist beispielsweise ein auf dem Markt erhältliches Stromkabel mit einem Stecker zu verstehen, das typischerweise zwei oder drei Adern aufweisen kann.

Vorteilhafterweise kann eine elektrische Leitung durch eine Leitungsöffnung, die an einem Gehäuseteil angeordnet ist, geführt und an die Anschlussvorrichtung, die im Innenraum des Warmwasserspeichers angeordnet ist, angeschlossen werden. Da der Wartungsdeckel über der Anschlussvorrichtung angeordnet ist und vorteilhafterweise abnehmbar ist, kann die Anschlussvorrichtung leicht erreichbar sein. Vorteilhafterweise kann dieser zusätzlich am Gehäuse angeordnete Wartungsdeckel, dessen einzige Aufgabe es sein kann, die Anschlussvorrichtung zugänglich zu machen, einfach und schnell zu öffnen sein. Die elektrische Leitung kann vorteilhafterweise bei abgenommenem oder geöffnetem Wartungsdeckel über die Aussparung ohne aufwendige Demontage oder Öffnung des Gehäuses an der Anschlussvorrichtung angebracht werden, und dadurch leicht montiert oder demontiert werden. Vorteilhafterweise ist die Anschlussvorrichtung eine Lüsterklemme, die die elektrische Leitung lösbar anschließen kann und die einen sicheren Anschluss der Leitung selbst bei häufigem Montieren und Demontieren ermöglichen kann.

Die elektrische Leitung kann vorteilhafterweise zur elektrischen Stromversorgung oder zur Steuerung des Warmwasserspeichers eingesetzt werden. Zur elektrischen Stromversorgung ist die elektrische Leitung vorteilhafterweise an ein Stromversorgungsnetz angeschlossen. Zur Steuerung des Warmwasserspeichers kann die elektrische Leitung, im Folgenden Steuerleitung genannt, ebenfalls vorteilhafterweise eingesetzt werden, wobei der Warmwasserspeicher über eine zweite elektrische Leitung, im Folgenden Stromleitung genannt, an ein Stromversorgungsnetz angeschlossen sein kann. Hierdurch kann vorteilhafterweise eine kabelgeführte Fernbedienung ermöglicht werden. Die Stromleitung kann vorteilhafterweise ebenfalls erfindungsgemäß angeschlossen sein. Die erfindungsgemäße Lösung erlaubt hierbei vorteilhafterweise, dass die Anschlussvorrichtung oder die Leitungsöffnung gemeinsam von der Steuerleitung und der Stromleitung genutzt werden, oder dass für jede Leitung eine eigene Anschlussvorrichtung oder Leitungsöffnung vorhanden ist. Sämtliche Kombinationen von gemeinsam und getrennt genutzter Anschlussvorrichtung und Leitungsöffnung können hierbei vorteilhafterweise möglich sein. Mit der vorliegenden Erfindung kann vorteilhafterweise eine Stromführung von einem Stromversorgungsnetz durch die Stromleitung und anschließend durch die Steuerleitung zu einem Heizelement ermöglicht werden.

Die Steuerleitung kann vorteilhafterweise mit einer Steuereinheit, die sich außerhalb des Gehäuses befinden kann, verbunden werden. Bei der Steuereinheit kann es sich beispielsweise um einen Schalter handeln, über den der Warmwasserspeicher ein- oder ausgeschaltet werden kann. Auch eine Verringerung der zur Verfügung stehenden Leistung kann vorteilhafterweise durch eine Steuereinheit ermöglicht werden, beispielsweise um Energie einzusparen. Der Benutzer kann vorteilhafterweise entscheiden, wie er das Warmwassergerät zu steuern wünscht. Verzichtet er auf die Steuerung, kann die Steuerleitung vorteilhafterweise durch einen kurzes Leitungsstück ersetzt werden, das nicht wie die Steuerleitung durch die Leitungsöffnung geführt ist, und das zwei Anschlüsse an der Anschlussvorrichtung kurzschließen kann. Diese Option kann vorteilhafterweise für die Auslieferung des Warmwasserspeichers gewählt werden. Die Steuerungsleitung kann auch nach einer Installation des Warmwasserspeichers angeschlossen werden, so dass der Benutzer vorteilhafterweise eine Wahl der Steuerung zu einem beliebigen Zeitpunkt treffen kann. Hierzu kann ein Wartungsmitarbeiter vorteilhafterweise zuerst den Wartungsdeckel entfernen, dann die Steuerleitung durch die Leitungsöffnung führen und an der Anschlussvorrichtung anschließen, und schließlich den Wartungsdeckel wieder anbringen. Dieser Arbeitsablauf ist vorteilhafterweise kurz und schnell durchzuführen. Die Rückstellung in den Auslieferungszustand ist vorteilhafterweise dabei immer möglich, und kann durch einen ähnlichen Arbeitsablauf erfolgen. Bei einem Warmwasserspeicher mit zwei Heizelementen kann der Benutzer vorteilhafterweise entscheiden, ob er keinen, nur einen oder beide Heizelemente steuern möchte, und diese Wahl jederzeit ändern. Hierzu weist die Anschlussvorrichtung vorteilhafterweise verschiedene Kontakte auf.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

In einer bevorzugten Ausführung sind die Leitungsöffnung und der Wartungsdecke an verschiedenen Gehäuseteilen angeordnet. Vorteilhafterweise wird hierdurch eine zum Anschluss einer elektrischen Leitung an die Anschlussvorrichtung besonders günstige Anordnung ermöglicht, bei der die Leitung beispielsweise nur durch die Leitungsöffnung geführt und ohne Knick an der Anschlussvorrichtung angebracht werden kann. Weiterhin kann eine fertigungstechnisch einfache Herstellung der Gehäuseteile ermöglicht werden.

Vorzugsweise ist der Wartungsdeckel mit einem Gehäuseteil mechanisch verbindbar. Besonders vorzugsweise wird der Wartungsdeckel mit Schrauben oder mit einer Schnappvorrichtung an einem Gehäuseteil befestigt. Hierdurch kann der Wartungsdeckel vorteilhafterweise einfach und schnell demontiert und wieder montiert werden, um beispielsweise eine defekte elektrische Leitung auszutauschen oder die elektrische Leitung an einen anderen Kontakt der Anschlussvorrichtung anzubringen. Besonders vorzugsweise weist der Wartungsdeckel ein Scharnier auf. Besonders vorzugsweise weist der Wartungsdeckel ein Scharnier und eine Befestigungseinrichtung auf. Besonders vorzugsweise ist diese Befestigungseinrichtung eine Schnappvorrichtung, besonders vorzugsweise eine Schraube. Um eine elektrische Leitung auszutauschen kann der Wartungsdeckel vorteilhafterweise aufgeklappt werden. Vorteilhafterweise verhindert die Befestigungseinrichtung ein unbeabsichtigtes Öffnen des Wartungsdeckels.

Die Erfindung weiterbildend ist vorzugsweise vorgesehen, dass der Warmwasserspeicher eine Dichtung aufweist, die an der Leitungsöffnung angeordnet ist. Besonders vorzugsweise ist diese Dichtung aus einem flexiblen Material, besonders vorzugsweise aus Kunststoff, besonders vorzugsweise aus Gummi gefertigt. Vorteilhafterweise kann die Dichtung die Leitungsöffnung sowohl ohne als auch mit durchgeführter elektrischer Leitung dicht verschließen. Um eine Leitung durch die Leitungsöffnung zu führen, und die Leitungsöffnung anschließend dicht zu verschließen, kann vorteilhafterweise die Leitung zuerst durch die aus Gummi gefertigte Dichtung geführt oder gestochen werden und anschließend die Dichtung in die Leitungsöffnung eingesetzt werden. Vorteilhafterweise kann die Leitungsöffnung aufgrund der Eigenschaften der Dichtung dicht verschlossen werden. Eine Bewegung der Leitung bezüglich der Dichtung kann vorteilhafterweise ermöglicht werden. Soll eine Steuerungsleitung nach Installation des Warmwasserspeichers angeschlossen werden, kann die Steuerungsleitung vorteilhafterweise vor Anschluss der Steuerungsleitung an die Anschlussvorrichtung durch die Dichtung geführt werden. Die Dichtung kann vorteilhafterweise vor dem Anbringen des Wartungsdeckels über die Leitungsöffnung gestülpt werden.

Vorzugsweise ist die Leitungsöffnung an dem zweiten Gehäuseteil angeordnet. Vorteilhafterweise kann eine besonders einfache Geometrie, bei der die elektrische Leitung keine Krümmung aufweist, ermöglicht werden. Wird das zweite Gehäuseteil beispielsweise aus einem Blech geformt, kann die Leitungsöffnung vorteilhafterweise in das ungeformte, ebene Blech, beispielsweise durch Stanzen oder Bohren, eingebracht werden.

In einer weiteren bevorzugten Ausführungsform ist der erste Gehäuseteil eine Gehäusekappe und der zweite Gehäuseteil ein Gehäusemantel. Besonders vorzugsweise weist der Gehäusemantel eine zylinderförmige Form auf. Besonders vorzugsweise weist der Querschnitt des zylinderförmigen Gehäusemantels eine rechteckige, besonders vorzugsweise eine kreisförmige, besonders vorzugsweise eine elliptische Form auf. Besonders vorzugsweise kann das Gehäuse zusätzlich noch aus einem dritten Gehäuseteil bestehen, der besonders vorzugsweise eine Gehäusekappe sein kann. Besonders vorzugsweise sind die Gehäuseteile aus Stahl, besonders vorzugsweise aus Edelstahl gefertigt. Vorteilhafterweise kann hierdurch eine einfache Geometrie des Gehäuses erreicht werden, die leicht gefertigt werden kann. Zudem kann vorteilhafterweise ein optisch gefälliges Erscheinungsbild ermöglicht werden. Es kann weiter vorteilhafterweise eine gut zugängliche Leitungsöffnung ermöglicht werden. Der Wartungsdeckel kann vorteilhafterweise leichter an der Gehäusekappe als an dem Gehäusemantel angeordnet werden. Die Leitungsöffnung, die beispielsweise ein rundes Loch ist, kann gleichermaßen an der Gehäusekappe und an dem Gehäusemantel angeordnet werden.

Besonders vorzugsweise ist die Größe des Wartungsdeckels kleiner als die Größe der Gehäusekappe. Besonders vorzugsweise ist die Größe des Wartungsdeckels kleiner als die Hälfte, besonders vorzugsweise kleiner als ein Viertel, besonders vorzugsweise kleiner als ein Achtel der Größe der Gehäusekappe. Vorteilhafterweise kann hierdurch die Stabilität der Gehäusekappe erhöht werden. Zudem kann eine stabile Befestigung des Wartungsdeckels ermöglicht werden.

Erfindungsgemäß bevorzugt ist die Anschlussvorrichtung neben der Leitungsöffnung angeordnet. Vorteilhafterweise ist die Anschlussvorrichtung hierbei nicht im zentralen Bereich des Innenraumes des Warmwasserspeichers, in dem beispielsweise ein Tank angeordnet sein kann, sondern in der Peripherie des Innenraumes angeordnet. Der Abstand von der Anschlussvorrichtung zu dem am Gehäuse angeordneten Loch ist vorteilhafterweise deutlich kleiner als der Abstand von der Anschlussvorrichtung zu dem Zentrum des Innenraumes. Hierdurch kann vorteilhafterweise die Länge der innerhalb des Innenraumes verlaufenden elektrischen Leitung minimiert werden, wodurch der Austausch der Leitung sich wesentlich vereinfacht, da eine einfache Kabelführung erzielt werden kann und die Leitung nur durch einen sehr kleinen Teil des Innenraums geführt werden muss.

Vorzugsweise ist eine Klemmvorrichtung zwischen der Anschlussvorrichtung und der Leitungsöffnung angeordnet. Vorteilhafterweise kann eine elektrische Leitung durch die Klemmvorrichtung mechanisch belastbar fixiert werden. Vorteilhafterweise kann hierdurch eine Zugentlastung für den Anschluss der Leitung an der Anschlussvorrichtung erreicht werden. Als Klemmvorrichtung können vorteilhafterweise kostengünstige auf dem Markt erhältliche Bauteile verwendet werden, wodurch Entwicklungskosten und Herstellungskosten eingespart werden können. In einer alternativen Ausführung hierzu kann die Klemmvorrichtung auch an einer anderen Stelle angeordnet sein. Beispielsweise kann die Anschlussvorrichtung zwischen Klemmvorrichtung und Leitungsöffnung angeordnet sein. Soll eine Steuerungsleitung nach Installation des Warmwasserspeichers angeschlossen werden, kann die Steuerungsleitung vorteilhafterweise vor oder nach dem Anschließen an die Anschlussvorrichtung über die Klemmvorrichtung fixiert werden, um eine Zugentlastung ermöglichen zu können.

Vorzugsweise erstreckt sich der Wartungsdeckel von der Anschlussvorrichtung bis hin zu der Leitungsöffnung. Vorteilhafterweise reicht der Wartungsdeckel dicht an die Leitungsöffnung heran, ohne diese zu berühren und diese zu überdecken, wodurch die Stabilität von Gehäuse, Öffnung und Wartungsdeckel vorteilhafterweise nicht beeinträchtigt wird. Über die Aussparung, die von dem Wartungsdeckel abgedeckt werden kann, ist vorteilhafterweise die Leitungsöffnung und die Anschlussvorrichtung bei Abnehmen des Wartungsdeckels zugänglich, wodurch beispielsweise ein Austausch oder Umstecken des Kabels einfach und schnell ausgeführt werden kann.

In einer weiteren bevorzugten Ausführungsform ist die Anschlussvorrichtung in einer Wartungskammer angeordnet, die von einem Kammerboden, einer Kammerwand, dem Wartungsdeckel und dem Gehäuseteil mit der Leitungsöffnung begrenzt ist. Vorteilhafterweise ist eine elektrische Leitung über die Leitungsöffnung an die in der Wartungskammer angeordnete Anschlussvorrichtung anbringbar. Besonders vorzugsweise kann der Kammerboden und die Kammerwand fest mit dem Gehäuseteil verbunden sein, an dem die Leitungsöffnung angeordnet ist. Natürlich sind auch Ausführungsformen möglich, in denen der Kammerboden und die Kammerwand fest mit einem anderen Gehäuseteil, beispielsweise mit dem Gehäuseteil, an dem der Wartungsdeckel angeordnet ist, verbunden sind. Vorteilhafterweise kann durch die Wartungskammer ein Raum gebildet werden, der eine zusätzliche Dichtung vor Feuchtigkeit darstellen kann.

Die Erfindung weiterbildend ist vorzugsweise vorgesehen, dass zumindest ein Teil einer elektrischen Leitung in einem Stauraum unter dem Wartungsdeckel anordnenbar ist. Vorteilhafterweise kann somit die Länge einer Leitung auf die optimale Länge angepasst werden ohne die Leitung zu-kürzen. Hierdurch kann vorteilhafterweise ein Durchhängen einer zu langen Leitung, das ein Verletzungsrisiko darstellen kann, vermieden werden.

### Kurzbeschreibung der Zeichnungen

Weitere vorteilhafte Ausgestaltungen werden nachfolgend an Hand eines in den Zeichnungen dargestellten Ausführungsbeispiels, auf welches die Erfindung jedoch nicht beschränkt ist, näher beschrieben.

Es zeigen schematisch:
- Fig. 1: einen Warmwasserspeicher zur Erwärmung von Wasser mittels elektrischer Energie;
und
- Fig. 2: ein Detail des Warmwasserspeichers nach Detail A aus Fig. 1 bei abgenommenem Wartungsdeckel.

### Ausführliche Beschreibung anhand von einem Ausführungsbeispiel

Bei der nachfolgenden Beschreibung einer bevorzugten Ausführungsform der vorliegenden Erfindung bezeichnen gleiche Bezugszeichen gleiche oder vergleichbare Komponenten.

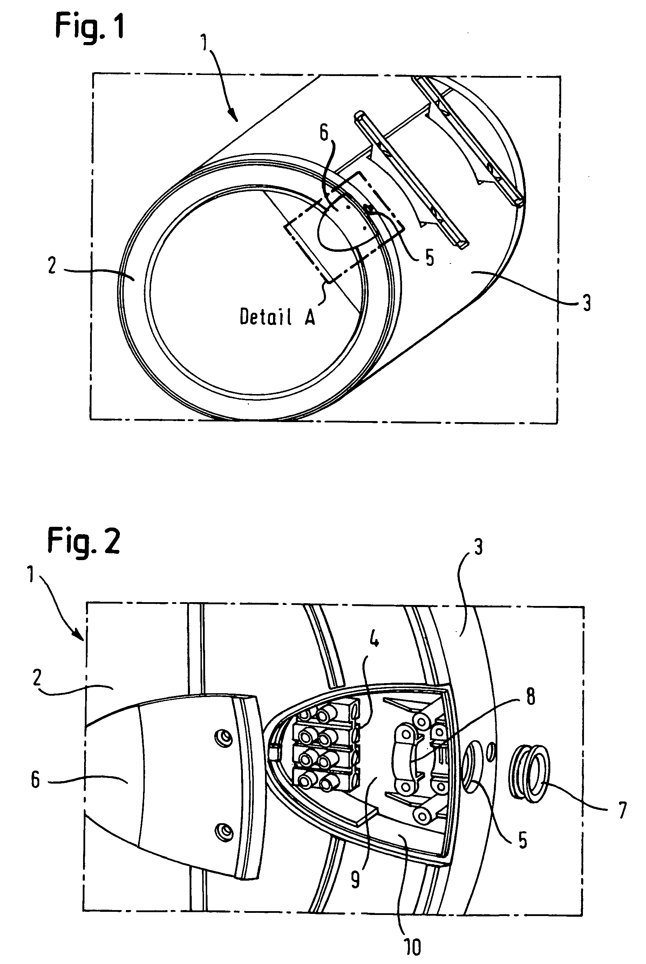

Das Ausführungsbeispiel wird im Folgenden anhand der Fig. 1 und 2 erläutert. In Fig. 1 dargestellt ist ein Warmwasserspeicher 1 zur Erwärmung von Wasser mittels elektrischer Energie. Fig. 2 zeigt Detail B aus Fig. 1 bei abgenommenem Wartungsdeckel 6. Das Gehäuse des Warmwasserspeichers 1 weist eine zylindrische Form auf und besteht aus einer Gehäusekappe, dem ersten Gehäuseteil 2, einem Gehäusemantel, dem zweiten Gehäuseteil 3 und einer weiteren Gehäusekappe, die in den Fig. 1 und 2 aus Darstellungsgründen nicht gezeigt ist. Ein Wartungsdeckel 6 ist an dem ersten Gehäuseteil 2 angeordnet und-deckt eine Aussparung, die die Form einer Einbuchtung am Rand des ersten Gehäuseteils 2 aufweist, ab. Um die Stabilität des Gehäuses, insbesondere die Stabilität des ersten Gehäuseteils 2 zu gewährleisten, ist der Wartungsdeckel 6 kleiner als die Gehäusekappe, und beträgt weniger als ein Achtel der Größe der Gehäusekappe.

Zum Anschließen von zumindest einer elektrischen Leitung ist im Innenraum des Warmwasserspeichers 1 eine Anschlussvorrichtung 4 in Form einer Lüsterklemme angebracht. Diese Lüsterklemme weist vier Anschlüsse zum Anschließen von elektrischen Leitungen auf. Durch eine Leitungsöffnung 5, die sich an dem zweiten Gehäuseteil 3 befindet, kann eine elektrische Leitung zu der Anschlussvorrichtung 4, die sich neben einer Leitungsöffnung 5 befindet geführt und dort angeschlossen werden. Eine weitere elektrische Leitung kann ebenfalls durch Leitungsöffnung 5 zu der Anschlussvorrichtung geführt und dort angeschlossen werden. Bei diesen beiden Leitungen kann es sich um eine Leitung zur Versorgung des Warmwasserspeichers mit elektrischem Strom, und um eine Leitung zur Steuerung des Warmwasserspeichers 1 handeln.

Der Wartungsdeckel 6 und die Leitungsöffnung 5 sind an verschiedenen Gehäuseteilen angeordnet, wodurch eine günstige Position zur Montage und Demontage einer elektrischen Leitung erreicht werden kann. Der Wartungsdeckel 6 ist über der Anschlussvorrichtung 4 angeordnet und erstreckt sich von der Anschlussvorrichtung 4 bis hin zu der Leitungsöffnung 5. Über zwei aus Darstellungsgründen nicht gezeigten Schrauben ist der Wartungsdeckel 6 mechanisch mit dem zweiten Gehäuseteil 3 verbunden. Um eine Zugentlastung für eine anzuschließende elektrische Leitung zu erreichen, ist eine Klemmvorrichtung 8 zwischen der Anschlussvorrichtung 4 und der Leitungsöffnung 5 angeordnet. Um die Leitungsöffnung 5 dicht zu verschließen, ist eine Dichtung 7 aus Gummi an der Leitungsöffnung 5 angebracht, die aus Darstellungsgründen etwas entfernt von der Leitungsöffnung 5 gezeigt ist. Die Anschlussvorrichtung 4 ist in einer Wartungskammer an einem Kammerboden 9 angebracht. Diese Wartungskammer wird durch den Kammerboden 9, die Kammerwand 10, den zweiten Gehäuseteil 3 und den Wartungsdeckel 6 begrenzt. In der Wartungskammer, die einen Stauraum darstellt, kann ein Teil der elektrischen Leitung untergebracht werden.

Erfindungsgemäß kann vorteilhafterweise ein einfacher, schneller und kostengünstiger Austausch der Leitung, beispielsweise aufgrund eines Defekts der Leitung, ermöglicht werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Warmwasserspeicher
- 2: erster Gehäuseteil
- 3: zweiter Gehäuseteil
- 4: Anschlussvorrichtung
- 5: Leitungsöffnung
- 6: Wartungsdeckel
- 7: Dichtung
- 8: Klemmvorrichtung
- 9: Kammerboden
- 10: Kammerwand

## Patentansprüche

1. Warmwasserspeicher (1) zur Erwärmung von Wasser mittels elektrischer Energie, der ein Gehäuse bestehend aus zumindest einem ersten (2) und einem zweiten Gehäuseteil (3) und eine Anschlussvorrichtung (4) zum Anschließen von zumindest einer elektrischen Leitung aufweist, wobei die Anschlussvorrichtung (4) im Innenraum des Warmwasserspeichers (1) angeordnet ist, und zumindest ein Gehäuseteil eine Leitungsöffnung (5) zur Durchführung einer elektrischen Leitung aufweist, wobei das erste Gehäuseteil (2) einen Wartungsdeckel (6) aufweist, der eine Aussparung des ersten Gehäuseteils (2) abdeckt und der über der Anschlussvorrichtung (4) angeordnet ist, **dadurch gekennzeichnet, dass** der erste Gehäuseteil (2) eine Gehäusekappe und der zweite Gehäuseteil (3) ein Gehäusemantel ist wobei die Größe des Wartungsdeckels (6) kleiner als die Größe der Gehäusekappe (2) ist.

2. Warmwasserspeicher (1) zur Erwärmung von Wasser mittels elektrischer Energie nach Anspruch 1, **dadurch gekennzeichnet, dass** die Leitungsöffnung (5) und der Wartungsdeckel (6) an verschiedenen Gehäuseteilen angeordnet sind.

3. Warmwasserspeicher (1) zur Erwärmung von Wasser mittels elektrischer Energie nach Anspruch 1 oder 2, **dadurch gekennzeichnet, dass** der Wartungsdeckel (6) mit einem Gehäuseteil mechanisch verbindbar ist.

4. Warmwasserspeicher (1) zur Erwärmung von Wasser mittels elektrischer Energie nach einem der vorherigen Ansprüche, **dadurch gekennzeichnet, dass** der Warmwasserspeicher (1) eine Dichtung (7) aufweist, die an der Leitungsöffnung (5) angeordnet ist.

5. Warmwasserspeicher (1) zur Erwärmung von Wasser mittels elektrischer Energie nach einem der vorherigen Ansprüche, **dadurch gekennzeichnet, dass** die Leitungsöffnung (5) an dem zweiten Gehäuseteil (3) angeordnet ist.

6. Warmwasserspeicher (1) zur Erwärmung von Wasser mittels elektrischer Energie nach einem der vorherigen Ansprüche, **dadurch gekennzeichnet, dass** die Anschlussvorrichtung (4) neben der Leitungsöffnung (5) angeordnet ist.

7. Warmwasserspeicher (1) zur Erwärmung von Wasser mittels elektrischer Energie nach einem der vorherigen Ansprüche, **dadurch gekennzeichnet, dass** eine Klemmvorrichtung (8) zwischen der Anschlussvorrichtung (4) und der Leitungsöffnung (5) angeordnet ist.

8. Warmwasserspeicher (1) zur Erwärmung von Wasser mittels elektrischer Energie nach einem der vorherigen Ansprüche, **dadurch gekennzeichnet, dass** der Wartungsdeckel (6) sich von der Anschlussvorrichtung (4) bis hin zu der Leitungsöffnung (5) erstreckt.

9. Warmwasserspeicher (1) zur Erwärmung von Wasser mittels elektrischer Energie nach einem der vorherigen Ansprüche, **dadurch gekennzeichnet, dass** die Anschlussvorrichtung (4) in einer Wartungskammer angeordnet ist, die von einem Kammerboden (9), einer Kammerwand (10), dem Wartungsdeckel (6) und dem Gehäuseteil mit der Leitungsöffnung (5) begrenzt ist.

10. Warmwasserspeicher (1) zur Erwärmung von Wasser mittels elektrischer Energie nach einem der vorherigen Ansprüche, **dadurch gekennzeichnet, dass** zumindest ein Teil einer elektrischen Leitung in einem Stauraum unter dem Wartungsdeckel (6) anordnenbar ist.

## Claims

1. Hot water reservoir (1) for heating water by means of electrical energy, having a housing consisting of at least a first (2) and a second (3) housing part and a connection device (4) for connecting at least one electrical line, whereby the connection device (4) is arranged in the interior of the hot water reservoir (1), and at least one housing part has a line opening (5) for lead-through of an electrical line, the first housing part (2) has a service cover (6) which covers a recess of the first housing part (2) and is arranged above the connection device (4), **characterised in that** the first housing part (2) is a housing cap and the second housing part (3) is a housing jacket, the size of the service cover (6) being smaller than the size of the housing cap (2).

2. Hot water reservoir (1) for heating water by means of electrical energy according to claim 1, **characterised in that** the line opening (5) and the service cover (6) are arranged on different housing parts.

3. Hot water reservoir (1) for heating water by means of electrical energy according to claim 1 or 2, **characterised in that** the service cover (6) is able to be connected mechanically to a housing part.

4. Hot water reservoir (1) for heating water by means of electrical energy according to one of the preceding claims, **characterised in that** the hot water reservoir (1) has a seal (7) which is arranged on the line opening (5).

5. Hot water reservoir (1) for heating water by means of electrical energy according to one of the preceding claims, **characterised in that** the line opening (5) is arranged on the second housing part (3).

6. Hot water reservoir (1) for heating water by means of electrical energy according to one of the preceding claims, **characterised in that** the connection device (4) is arranged next to the line opening (5).

7. Hot water reservoir (1) for heating water by means of electrical energy according to one of the preceding claims, **characterised in that** a clamp device (8) is arranged between the connection device (4) and the line opening (5).

8. Hot water reservoir (1) for heating water by means of electrical energy according to one of the preceding claims, **characterised in that** the service cover (6) extends from the connection device (4) to the line opening (5).

9. Hot water reservoir (1) for heating water by means of electrical energy according to one of the preceding claims, **characterised in that** the connection device (4) is arranged in a service chamber which is delimited by a chamber floor (9), a chamber wall (10), the service cover (6) and the housing part with the line opening (5).

10. Hot water reservoir (1) for heating water by means of electrical energy according to one of the preceding claims, **characterised in that** at least one part of an electrical line is able to be arranged in a stowage space below the service cover (6).

## Revendications

1. Chauffe-eau à accumulation (1) destiné à échauffer de l'eau au moyen d'énergie électrique, lequel présente un boîtier, constitué au moins d'une première partie de boîtier (2) et d'une deuxième partie de boîtier (3), et un dispositif de connexion (4) destiné à connecter au moins une ligne électrique, le dispositif de connexion (4) étant disposé dans l'espace intérieur du chauffe-eau à accumulation (1), et au moins une partie de boîtier présentant une ouverture de ligne (5) pour le passage d'une ligne électrique, la première partie de boîtier (2) présentant un couvercle de maintenance (6) qui recouvre un évidement de la première partie de boîtier (2) et est disposé au-dessus du dispositif de connexion (4), **caractérisé en ce que** la première partie de boîtier (2) est un capuchon de boîtier et **en ce que** la deuxième partie de boîtier (3) est une enveloppe de boîtier, la taille du couvercle de maintenance (6) étant plus petite que la taille du capuchon de boîtier (2).

2. Chauffe-eau à accumulation (1) destiné à échauffer de l'eau au moyen d'énergie électrique selon la revendication 1, **caractérisé en ce que** l'ouverture de ligne (5) et le couvercle de maintenance (6) sont disposés sur différentes parties du boîtier.

3. Chauffe-eau à accumulation (1) destiné à échauffer de l'eau au moyen d'énergie électrique selon la revendication 1 ou 2, **caractérisé en ce que** le couvercle de maintenance (6) est raccordable mécaniquement à une partie de boîtier.

4. Chauffe-eau à accumulation (1) destiné à échauffer de l'eau au moyen d'énergie électrique selon l'une quelconque des revendications précédentes, **caractérisé en ce que** le chauffe-eau à accumulation (1) présente un joint d'étanchéité (7) qui est disposé sur l'ouverture de ligne (5).

5. Chauffe-eau à accumulation (1) destiné à échauffer de l'eau au moyen d'énergie électrique selon l'une quelconque des revendications précédentes, **caractérisé en ce que** l'ouverture de ligne (5) est disposée sur la deuxième partie de boîtier (3).

6. Chauffe-eau à accumulation (1) destiné à échauffer de l'eau au moyen d'énergie électrique selon l'une quelconque des revendications précédentes, **caractérisé en ce que** le dispositif de connexion (4) est disposé à côté de l'ouverture de ligne (5).

7. Chauffe-eau à accumulation (1) destiné à échauffer de l'eau au moyen d'énergie électrique selon l'une quelconque des revendications précédentes, **caractérisé en ce qu'**un dispositif de serrage (8) est disposé entre le dispositif de connexion (4) et l'ouverture de ligne (5).

8. Chauffe-eau à accumulation (1) destiné à échauffer de l'eau au moyen d'énergie électrique selon l'une quelconque des revendications précédentes, **caractérisé en ce que** le couvercle de maintenance (6) s'étend du dispositif de connexion (4) jusqu'à l'ouverture de ligne (5).

9. Chauffe-eau à accumulation (1) destiné à échauffer de l'eau au moyen d'énergie électrique selon l'une quelconque des revendications précédentes, **caractérisé en ce que** le dispositif de connexion (4) est disposé dans une chambre de maintenance qui est délimitée par un fond de chambre (9), une paroi de chambre (10), le couvercle de maintenance (6) et la partie de boîtier munie de l'ouverture de ligne (5).

10. Chauffe-eau à accumulation (1) destiné à échauffer de l'eau au moyen d'énergie électrique selon l'une quelconque des revendications précédentes, **caractérisé en ce qu'**au moins une partie d'une ligne électrique peut être disposée dans un espace de rangement sous le couvercle de maintenance (6).
